# EUROPEAN PATENT SPECIFICATION

(11) **EP 1 226 763 B1**
(45) Date of publication and mention of the grant of the patent: **10.11.2004**
(21) Application number: 02075306.7
(22) Date of filing: 25.01.2002
(51) Int. Cl.: A23P 1/08, B05C 19/06

(54) **Method and device for coating food products with particulate coating material**
Verfahren und Vorrichtung zur Beschichtung von Nahrungsmitteln mit partikelförmigem Material
Méthode et appareil pour l'enrobage de produits alimentaires par une matière particulaire

(30) Priority: 29.01.2001 NL 1017214
(43) Date of publication of application: 31.07.2002
(73) Proprietor: Stork Titan B.V., 5830 AE Boxmeer (NL)
(72) Inventor: van der Eerden, Hendricus Franciscus Jacobus Maria, 5421 PS Gemert (NL); Scheepens, Franciscus Gerardus Maria, 5421 RH Gemert (NL); Zeegers, Johannes Gerardus Martinus Antonius, 5836 AB Sambeek (NL); Willems, Jacobus Wilhelmus, 5853 EW Siebengewald (NL)
(74) Representative: Volmer, Johannes Cornelis

(56) References cited:
- EP-A- 0 411 174
- WO-A-90/07985
- GB-A- 2 099 276
- US-A- 2 080 113
- US-A- 2 659 338
- US-A- 2 865 766
- US-A- 3 404 659
- US-A- 3 703 382
- US-A- 4 372 994
- US-A- 4 808 423

## Description

According to a first aspect, the invention relates to a method for coating moving food products with particulate, such as granular and/or pulverulent, free-flowing coating materials, which method comprises the steps of applying a coating to the food products at a coating position, removing and collecting coating material which has not been applied to the food products at a collection position, and returning collected coating material from the collection position to a distribution position, and distributing the returned coating material to the coating position.

A method of this type is generally known in the art and is used, for example, to apply particulate coating materials, such as breadcrumbs, flour, cornflakes and the like to edible products, for example (preshaped) meat products, to which an adhesive layer of egg whites may optionally have been applied. In a known crumbing method, first of all a bottom layer of coating material is formed on an endless conveyor belt which is suitable for this purpose, for example made from wire mesh, at a first coating position in the vicinity of the entry end of the coating device, after which the food products which are to be coated are positioned on top of the bottom layer which has been formed, and then a thick top layer of the coating material is poured onto the food products at a second coating position, so that the food products are completely embedded in the coating material. After the top layer has been pressed on, if required, surplus coating material (approximately 90%) is removed from the food products thus coated, for example by vibration or blowing, and is collected through the conveyor belt and returned to a distribution position, where the returned material is once again divided into various streams of coating material which are passed to the relevant coating positions. The coated food products are discharged and processed further, for example in a hot-air oven, roasting oven or freezer. Since the collection position of the coating device, as seen in the vertical direction, usually lies below the distribution position and coating positions and downstream thereof, in the machine direction, in the known method, coating material is returned by means of a combination of a plurality of conveyor means which are directed horizontally, parallel to the longitudinal direction of the coating device, and vertically, for example worm conveyors and pumps, and additional transverse conveying, perpendicular to the longitudinal direction of the device, also occurs in order to distribute the returned material transversely over the belt to the various coating positions, for example with the aid of horizontal endless conveyor belts of different lengths which are arranged in the transverse direction.

One drawback of this way of returning coating material is that during the conveying considerable mechanical forces are exerted on the particulate coating materials, which results in comminution of the coating material and therefore in a change in the particle size distribution. In addition, coarse and fine coating material becomes segregated during this conveying, so that the uniformity of the particle size distribution is not maintained in the layers of coating material which are ultimately formed. The particle size distribution has an effect on the pouring properties of the coating material. These factors affect the quality of the coating layer which has been applied to the food products. A further drawback of the known method and device is that the device is difficult to clean, on account of the presence of the various conveyors with moving parts and on account of the limited accessibility. Also, the changeover times required when switching to a different type of coating material, for example from relatively fine breadcrumbs to a coarse coating material in chunk or flake form, are relatively long.

The problem of comminution of coating material is known per se, and various solutions have been proposed in this respect, cf. for example EP-B-0 411 174, in which the conveyor means comprise, inter alia, a drum conveyor, which can rotate about a horizontal axis, with internal compartments for circulation of the coating material, through which an endless belt bearing products to be coated passes, and WO-90/07985, in which the conveyor means comprise a drum conveyor, which is arranged along an endless conveyor belt and has a horizontal axis of rotation, oriented transversely with respect to the belt, and also internal compartments. However, in these known devices too, additional conveyor belts are used to distribute the returned material, giving rise to comminution and segregation of the coating material, with all the resultant drawbacks. In addition, these known devices are complex and relatively large, and therefore expensive, not to mention difficult to clean.

US-A-2 080 113 discloses a method and device for preparing confections having a coating with particulate material. After coating excess material is returned back to a single coating position using a transverse conveyor and adjacent elevator.

GB-A-2 099 276 discloses a method and device for coating articles of confectionery with particulate material, wherein excess material is divided into two separate flows, which are conveyed back to respective coating positions by separate conveyors of different types.

US-A-4 372 994 concerns a technique for coating longitudinally extending members like wire, with a particulate plastic coating material. The members are pulled through a mass of particulate plastic coating material arranged on a reciprocating table. Excess material is returned back to the table by a bucket conveyor.

US-A-3 404 659 discloses a machine for coating articles with finely divided particles, wherein a number of conveyors including a helical mixer, a rotating drum type conveyor and helical conveyors are included in order to return excess coating material for reuse to respective coating positions.

US-A-4 808 423 discloses a method and apparatus for coating foodstuff with a particulate material derived from fresh root vegatables using a horizontal conveyor for a foodstuff, means for forming a bottom layer of particulate material at a first position prior to applying the foodstuff onto the conveyor, means for forming an upper layer of particulate material at a second position, as well as means for returning excess particulate material for redistributing in separate flows to the respective coating positions.

US-A-3 703 382 discloses among others a coating and distribution station used in coating edible food articles comprising a hopper having different outlets for forming a bottom layer and upper layer of particulate material respectively.

From US-A-2-865 766 a coating and distribution station of a particulate coating device is known, which station comprises a hopper having two hopper compartments designed to evenly distribute the particulate material.

US-A-2 659 338 discloses a machine for coating raw oysters, comprising a coating and distribution station. This known station comprises a hopper having different outlets for forming a bottom layer and upper layer of particulate material respectively.

Broadly, the object of the present invention is to reduce the above drawbacks of the known methods and devices. More particularly, it is an object of the invention to provide a method for coating food products with free-flowing coating material of a plurality of types, in which the original particle size distribution of coating material freshly fed is retained as far as possible, and also a coating device which is readily accessible for cleaning and maintenance work and in which, furthermore, the changeover times are relatively short. Yet another object of the invention is to provide a distribution device for distributing returned coating material in at least two streams which has few if any moving parts.

For this purpose, in the method of the type described in the introduction, according to the invention as claimed in claim 1, collected coating material is returned substantially by batchwise displacement of collected coating material in one plane, which connects the collection position and the distribution position to one another.

In the method according to the invention, the movements for returning the coating material, which in the known methods and devices take place in one or more horizontal and vertical planes with the aid of different conveyor means, are combined into a single movement, the movement path of which extends in one plane between collection position and distribution position. In the present description, the term "collection position" is understood as meaning the position of discharge from the collection device used, while the "distribution position" indicates the location where the entrance to the distribution unit used for this purpose is situated. A movement of this type, which is not composed of separate horizontal and vertical displacements, reduces the comminution and segregation which otherwise occur as a result of changes in direction of the stream of coating material and transitions between conveyors. Moreover, in the invention the coating material is conveyed in a batchwise manner, so that movement of the particles of the coating material with respect to one another is limited, which also counteracts segregation and comminution. The batchwise conveying also means that the coating material which is supplied to the distribution position first is also the first material applied to the products to be coated. Since the coating material does not form any fine dust, in the event of further processing of the food products in a frying oven, the frying fat is contaminated to a lesser extent, which has a beneficial effect on the quality of the frying fat and on the frying process, since this fat can be used for longer without having to be changed. The batchwise conveying allows numerous types of particulate coating materials to be processed using the method according to the invention. Since the return movement takes place in one plane, conveying can easily be effected using a single conveyor means, so that the number of transitions is small, which makes a further contribution to counteracting comminution and segregation. In many cases, the distribution position will be at a greater height than the collection position, which is generally located downstream of the distribution position, so that in such cases the return movement takes place in a plane which is inclined in the longitudinal direction of the coating device. Other possibilities include, for example, purely vertical or horizontal conveying of the coating material from the collection position to the distribution position. On account of the small number of moving parts and the generally inclined arrangement, the accessibility of the coating device for cleaning, maintenance and repair purposes is good.

The method according to the invention is used for applying the coating material to the food products on all sides. For this purpose the step of applying coating material to the food products comprises the sub-steps of forming a continuous bottom layer of coating material at a first coating position, placing food products which are to be coated onto the bottom layer of coating material which has been formed, and forming a top layer of coating material on the food products at a second coating position. During the step of distributing returned coating material, two streams of coating material are then formed, and are guided to the first and second coating positions, i.e. the locations where the coating takes place, namely the outlet of the distribution device.

In general, as has already been stated above, the distribution position is at a higher level than the collection position. The coating position is generally also at a higher level than the collection position. More particularly, the first coating position is located above a rising part of the endless conveyor belt, the second coating position is located above a horizontal part thereof, and the collection position is located below the horizontal upper part, downstream of the coating positions, so that the coating material to be returned is guided obliquely upwards from the collection position back to the distribution position, which is located above the coating position(s).

In will be understood that when the method is being started and ended, the returning comprises only supplying or only discharging coating material.

According to a second aspect as claimed in claim 3, the invention relates to a coating device for coating food products with particulate, free-flowing coating materials, in particular a crumbing machine or a flour-coating machine, which coating device comprises an endless conveyor belt, which is suitable for receiving the food products and conveying them from an inlet end to an outlet end of the coating device, and a distribution and coating station, which is arranged in the vicinity of the inlet end and above the endless conveyor belt, for distributing and applying coating material, and a collection device, which is arranged in the vicinity of the outlet end, below the top part of the endless conveyor belt, for collecting coating material which has not been applied to the food products, as well as conveyor means for conveying coating material from the collection device to the distribution and coating station, in which device the conveyor means are designed for batchwise conveying of coating material from the collection device to the distribution and coating station along a conveyor path which lies in one plane. The coating device according to the invention achieves the same advantages as those described above in connection with the method.

The conveyor means advantageously comprise a number of separate conveying containers, which can be displaced in guide means which delimit a conveyor path. One example of a conveying container of this type comprises a cylindrical can or receptacle, with an open top side and optionally a closed base, or a self-unloading base, for example a hinged base. The use of separate conveying containers makes them easy to replace and increases the ease of cleaning and maintenance. The outer wall of the cylinder is preferably provided with a circumferential groove, so that side guides, which are arranged on both sides of the conveyor path, for example flat side guides in strip form, can engage in the circumferential groove. In addition, this groove provides space between adjacent conveying containers for the conveyor means, for example the engagement means thereof, so that the conveying containers are not pushed apart. If necessary, as in the case of conveying containers without a base, the guide means may also comprise a flat bottom guide, which has a surface which closes off the underside of the bases of the conveying containers over at least a section from the collection device to the distribution and coating station.

To keep the total width of the coating device, as well as its height, relatively small, unlike the known drum conveyors, the conveyor track is preferably oval-shaped. The main axis advantageously extends in the machine direction.

For displacement of the separate conveying containers, such as cans, the conveyor means advantageously comprise a turntable which can rotate about an axis which is substantially perpendicular to the plane of the conveyor path, is preferably arranged on the inner side, and even more preferably in the vicinity of the bottom end of the conveyor path, and is provided with engagement means for engaging at least one conveying container, such as fingers or arms which extend radially outwards between the conveying containers.

Above the turntable there is advantageously a second distribution disc which is fixedly connected to the turntable and comprises continuous distribution openings located along its circumference, in such a manner that the distribution openings are aligned with respect to conveying containers located beneath them in the conveyor path. Coating material which is collected, for example in a V-shaped receptacle with elongate discharge slot at the bottom end, passes onto the distribution disc and is moved into the conveying containers via the distribution openings.

The conveyor means for returning particulate coating material are advantageously made from plastic.

The bottom guide is advantageously provided with at least one continuous pouring opening which is located above an entry opening of the distribution and coating station. To allow the returned material to already to be distributed to some extent, the pouring opening is preferably an elongate slot. Screens may be provided in the pouring opening or openings, in order to allow particles of the coating material of desired dimensions to pass through, while lumps, for example comprising coating material which has caked together, are blocked and, if desired, can be discharged from the coating device. By making use of this discharge feature and closing any other pouring openings, the device can be emptied quickly in the event of a changeover to a different type of coating material. For this purpose, the device according to the invention comprises a final pouring opening, which is connected to an outlet for discharging coating material from the device. The use of screens in the pouring openings also allows sorting according to particle size, if the screen openings, as seen in the direction of movement of the conveying containers, have increasingly large dimensions.

The distribution and coating station comprises a distribution chamber for dividing coating material into at least two streams of coating material. According to a preferred embodiment, the distribution and coating station comprises a housing which is arranged above the endless conveyor belt and has an entry opening for the coating material which is supplied by the conveyor device, and a top pouring nozzle, which extends obliquely towards the endless belt in the machine direction, for the purpose of forming a top layer in the case of breadcrumbs, or for the purpose of forming a curtain of flour, such as in a flour-coating machine. The pouring nozzle may, for example, be in the shape of a slot which extends over the width of the conveyor belt. If desired, the pouring nozzle may be partly provided with cover strips, the position and action of which is preferably adjustable. This allows the coating material to fall predominantly onto those strips of the endless conveyor belt where the products to be coated are always positioned.

To form a bottom layer, the distribution and coating station is advantageously provided with at least one, preferably two side chutes, which are arranged on either side of the endless conveyor belt, and extend beyond an optionally present supply belt for the food products which are to be coated, and have a bottom pouring nozzle which slopes towards the endless conveyor belt. The coating device is usually provided with a supply belt, which extends above a sloping part of the endless conveyor belt, for supplying food products which are to be coated. The side chute with the bottom pouring nozzle then extends vertically beyond this supply belt.

To divide returned coating material into different streams, the distribution chamber may have a base section which tapers to a point in the centre (inverted V shape), the side faces of which each slope towards one side chute. The pointed or top edge is preferably provided with a distribution plate which can move to and fro about a pivot axis which is substantially horizontal in the machine direction, in order to further improve the distribution over the side faces.

The distribution and coating station described above offers the advantage of including few if any movable parts, so that it requires little maintenance and is easy to clean, and therefore can also be used in coating devices which have other conveying systems.

In another embodiment of the device according to the invention, the conveying containers have a closed base and an open top side, and the guide means are designed to allow the conveying containers to tilt above the entry opening of the distribution and coating station.

In addition to the said conveying containers in can form, the conveying containers may also comprise spaces which are delimited by transverse plates, which are secured to an endless chain comprising links, and by side guides of the guide means and a bottom guide with a closed surface. A conveyor system of this type is also known as a partitioned belt.

Other variants of the conveyor means comprise an endless chain which is arranged next to the endless belt and is guided over at least one guide wheel arranged at the top end and at least one guide wheel arranged at the bottom end of the conveyor path, to which there are attached carriers which are spaced apart, and are preferably self-unloading, such as laddles, receptacles or grippers.

To counteract contamination of further processing stations, for example an oven, the coating device advantageously comprises a blowing device for blowing surplus material off the coated products. One example of such a device is air knives arranged above and below the conveyor belt, in the vicinity of the collection position. With a view to minimizing the production and escape of dust, the blowing device advantageously comprises a hood which is positioned over the conveyor belt and extends from the distribution device to the product discharge side of the coating device. The hood is hinged and is designed in a number of parts, so that accessibility to the interior of the hood and the components arranged therein is good. An air-displacement means, for example the impeller of a fan, is positioned in the hood and sucks air into the hood and passes it to the air knives. The motor is located outside the hood, for example on top of the hood, in order to minimize contact with coating material in dust form. The shape of the hood and the shape and position of the air knives are selected in such a manner that air flow, which could lead to dust escaping, is minimal. The direction of the air flow generated is opposite to the product direction. On the product discharge side, some air is sucked in, so that it is impossible for any dust to escape at that point. Although some air may escape in the vicinity of the distribution device, the dust from this air has already been deposited, on account of the length of the hood. To keep the amount of dust in the impeller at a low level, the air is advantageously sucked in via a coarse labyrinth. The blowing station described above is also advantageous in coating devices other than the coating device according to the invention described above.

The invention is explained below with reference to the appended drawing, in which:
- Fig. 1: shows a perspective view of an embodiment of a coating device according to the invention;
- Fig. 2: shows a perspective view, with partially cut-away parts, of the device shown in Fig. 1;
- Fig. 3: shows a perspective view with other partially cut-away parts, of the device shown in Fig. 1;
- Fig. 4: shows a perspective view, with partially cut-away parts, of an embodiment of a distribution device which can be used in the device according to the invention;
- Fig. 5: shows a detail of the distribution device illustrated in Fig. 4;
- Fig. 6: shows a partial perspective view of a second embodiment of conveyor means which can be used in a coating device according to the invention;
- Figs. 7 and 8: show two different embodiments of conveying containers with a self-unloading base;
- Fig. 9: shows a partial perspective view of a third embodiment of conveyor means which can be used in a coating device according to the invention;
- Fig. 10: shows a perspective view of a further embodiment of a coating device according to the invention;
- Fig. 10A: shows a detailed view of the device illustrated in Fig. 10;
- Fig. 11: shows a diagrammatic view of yet another embodiment of a device according to the invention;
- Fig. 12: diagrammatically depicts an embodiment of a blowing station; and
- Fig. 13: shows a perspective view of another embodiment of a conveying container.

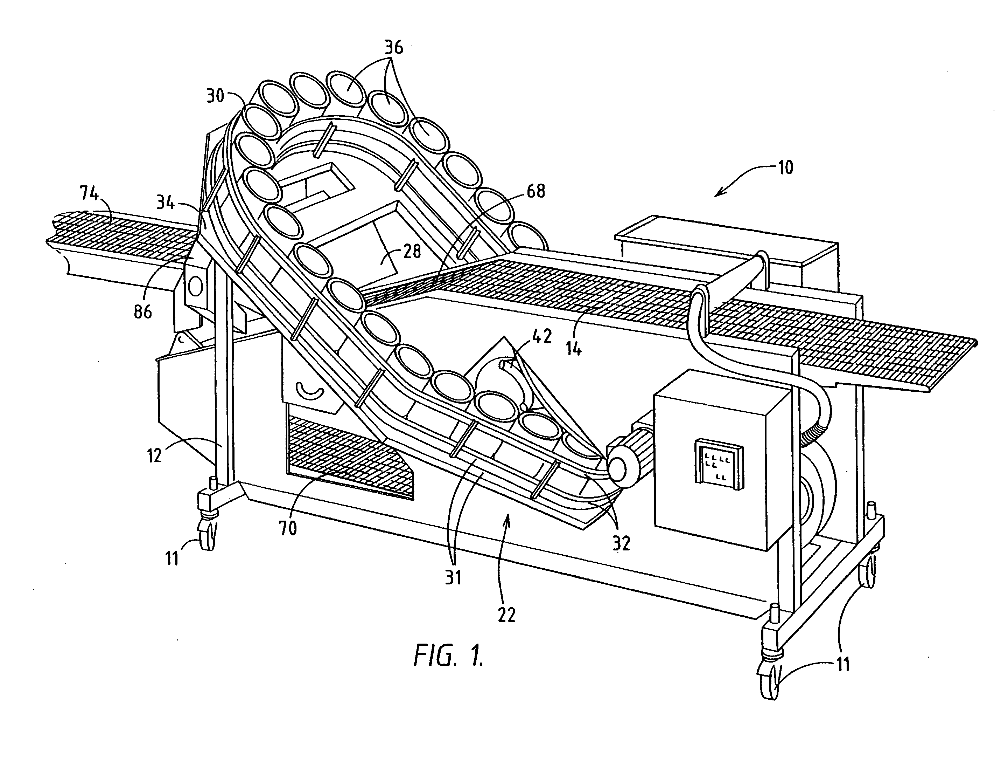

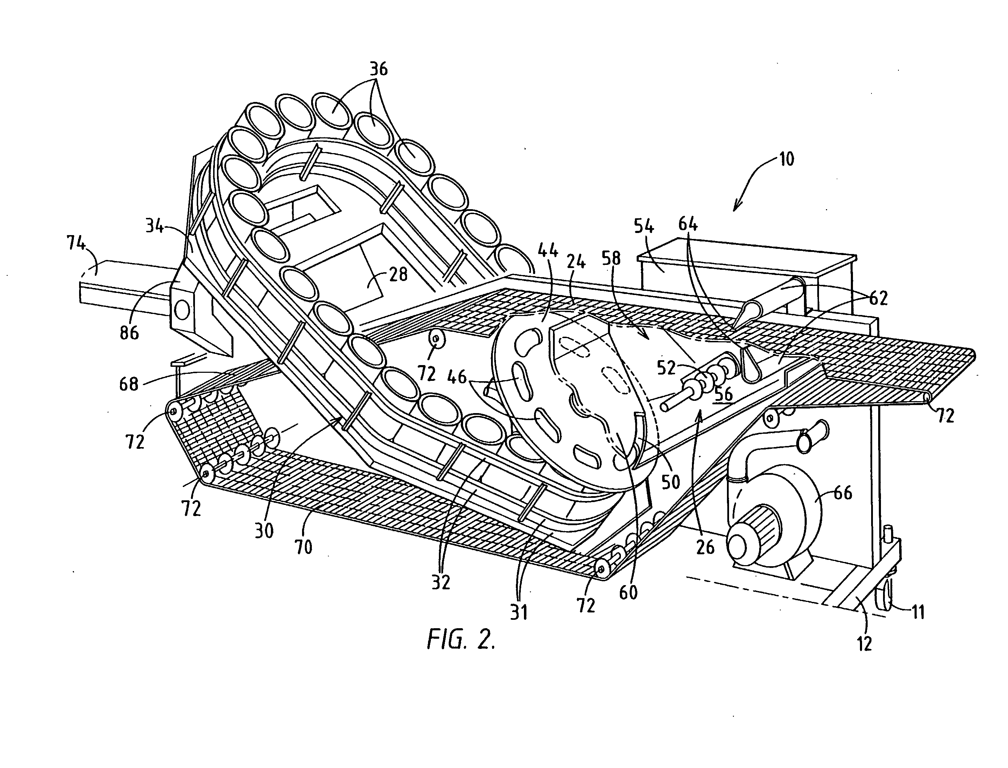

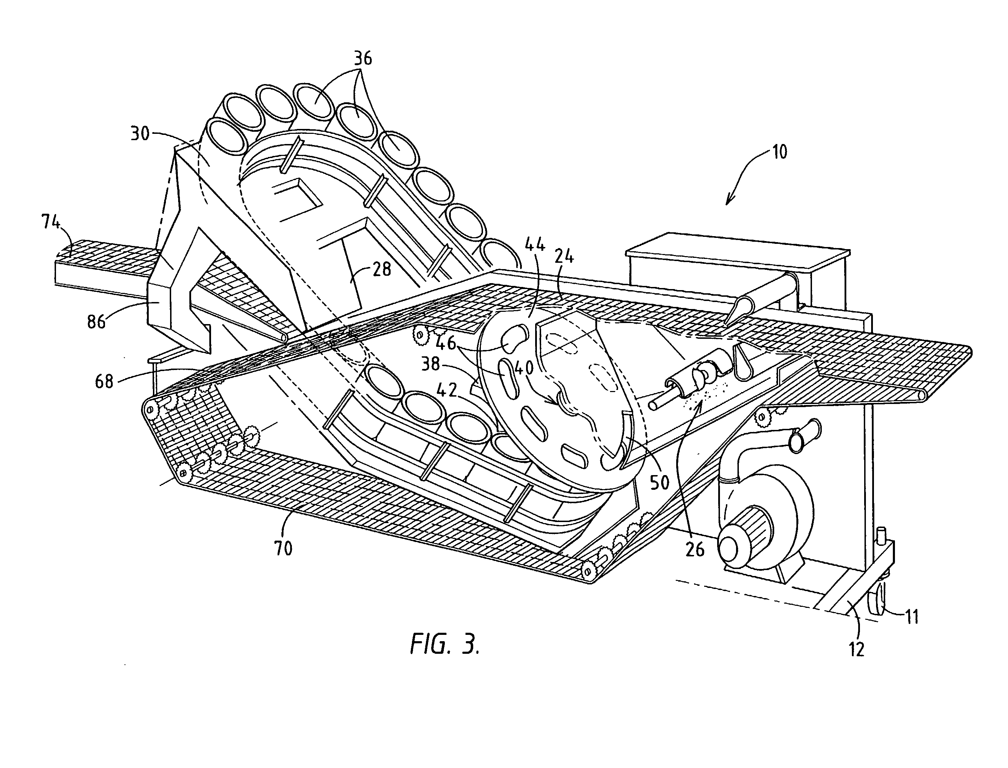

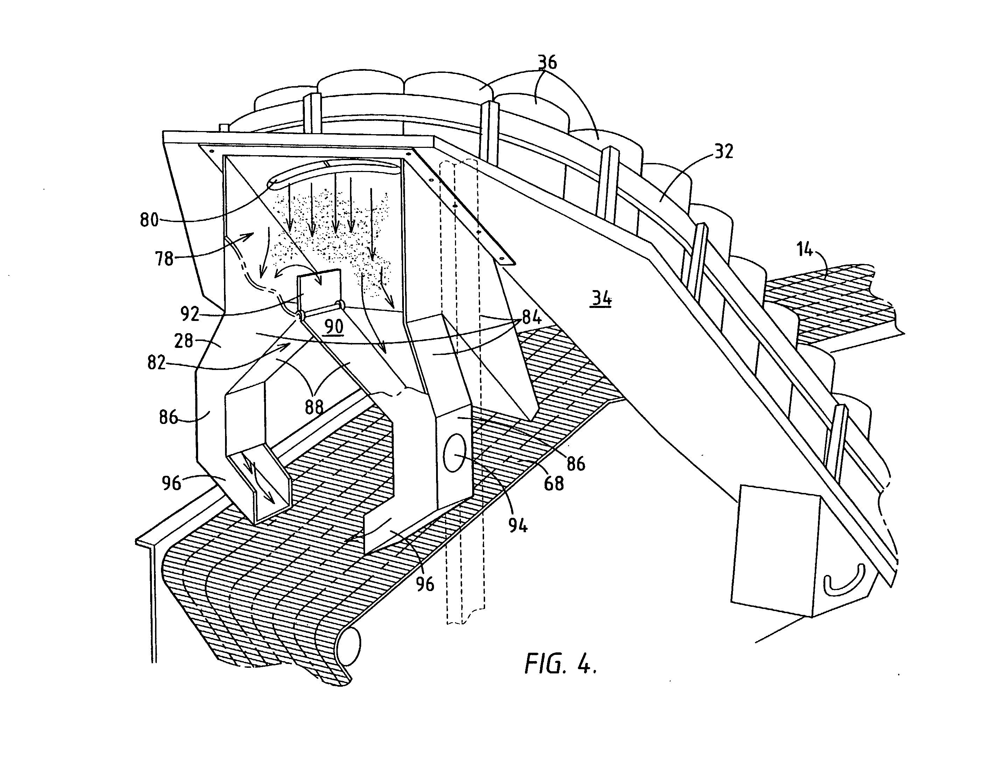

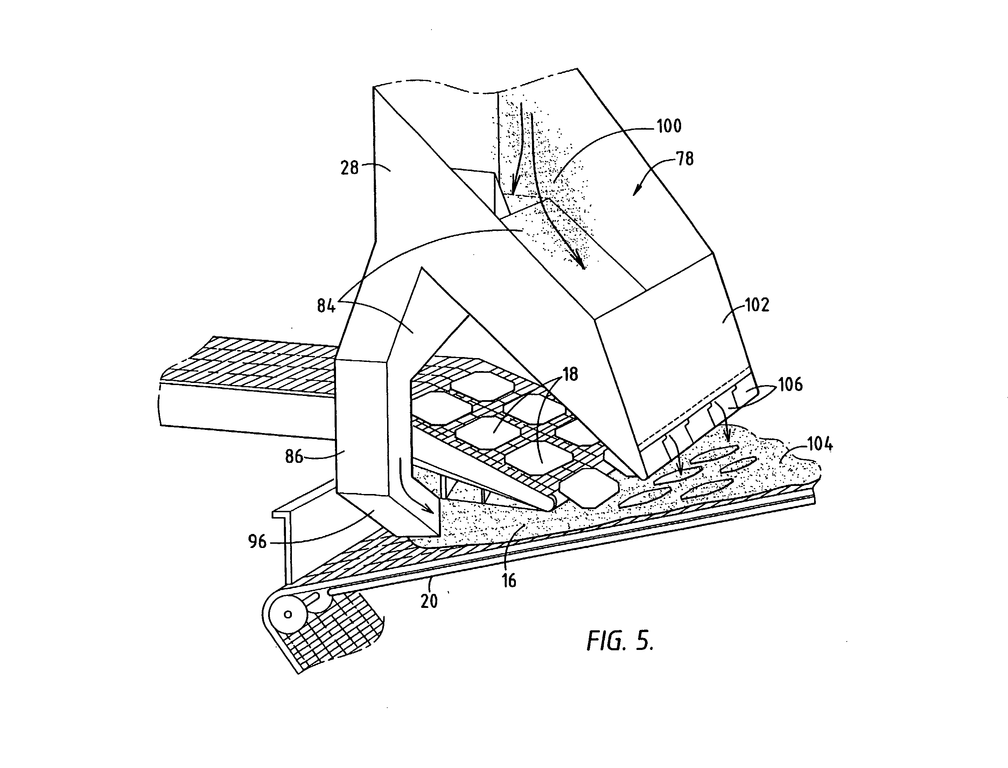

Figs 1 to 5 show a first embodiment of a coating device according to the invention, in this case a crumbing machine, which is denoted overall by reference numeral 10. The coating device 10 comprises a movable frame 12 which is provided with wheels 11 and on which the remaining components are mounted. The coating device 10 comprises an endless conveyor belt 14, which is suitable for bearing a bottom layer 16 of coating material and food products 18 which are to be placed thereon, while also allowing the coating material to pass through it, for example a metal mesh belt with a guide plate 20 below it (cf. Fig. 5) which extends over the section of the conveyor belt 14 where the bottom layer 16 of coating material is to be present, i.e. from the coating position to the collection position. Conveyor means 22 for returning coating material from a collection device 26, which is located beneath a horizontal top part 24 of the conveyor belt 14, to a distribution and coating station 28 comprise an oval, continuous conveyor path 30. This conveyor path 30 lies in a plane which slopes obliquely in the machine direction, and is delimited by guide means 31, in this case flat side guides 32 which are attached to a flat bottom guide 34 with a continuous surface, over which a continuous series of conveying containers 36 can be displaced. The conveying containers 36 comprise cylinders with an open top side and underside. For the purpose of displacing the conveying containers 36 along the conveyor path 30, there is a drive, which comprises a turntable 38 which can rotate about an axis of rotation 40 which is perpendicular to the plane of the conveyor path 30. On the circumference, the turntable 38 is provided with engagement means 42 which in each case engage one conveying container 36 and move it onwards. A distribution disc 44 is likewise secured on the same axis 40 and is provided, on its circumference, with a number of continuous distribution openings 46 for distributing coating material which has been discharged from the collection device 26 into the conveying containers 36 located beneath the distribution disc 44. The top side of the distribution disc 44 adjoins the bottom edge of a base section 48, which runs parallel to the conveyor path 30 and therefore to the distribution disc 44, of the collection device 26, in which a curved discharge slot 50, corresponding to the distribution openings 46, is provided. If necessary, fresh coating material can be supplied from a storage hopper 54, with the aid of a feed screw 52, to the collection device 26, which comprises a funnel-shaped collection chamber 56, which is located beneath the horizontal top part 24 of the conveyor belt 14, with an open top side 58 and tapering base 60. At the downstream side of the collection device 26, below and above the horizontal top part 24 of the conveyor belt 14, there are air knives 62 with outlet openings 64 directed oppositely to the conveying direction, which are supplied with air with the aid of a fan 66. The conveyor belt 14 comprises a rising part 68 in the vicinity of the entry side, where products which are to be coated are supplied, and a horizontal top part 24, which extends as far as the outlet side for discharging coated products, and a bottom part, which is denoted overall by reference numeral 70. The conveyor belt 14 is guided in a known way over guide and return pulleys 72 and is driven with the aid of a drive unit (not shown in more detail). A supply belt 74 for supplying the food products to the coating device 10 is arranged on the entry side of the device 10.

At the distribution position of the coating device, a distribution and coating station 28 is attached to the bottom of the plate-like bottom guide 34. The distribution and coating station 28 comprises a distribution chamber 78 for dividing returned coating material into two streams. A passage slot, which matches the curvature of the conveyor path 30, is provided as pouring opening 80 for supplying coating material, so that when a conveying container 30 is located above this passage slot 80, the coating material flows out of it. Coating material flowing into the distribution chamber 78 is distributed by means of a suitable shaping of the base 82 and outlets 84 of the distribution chamber 78. In the embodiment illustrated, side chutes 86 which extend sideways and downwards are provided on either side of the endless conveyor belt 14, in such a manner that the supply belt 74 can be guided between them. For this purpose, the base 82 of the distribution chamber 78 comprises a roof-shaped base section 88, the side faces 90 of which slope downwards in the direction of the side chutes 86. To achieve better distribution of the returned coating material, the ridge of the roof-shaped base section 88 is provided with a distribution plate 92 which can move to and fro and has a pivot axis which extends in the longitudinal direction of the device. The side chutes 86 with viewing windows 94 have, at their end, pouring nozzles 96 which run obliquely downwards towards the endless conveying belt 14, so that coating material is distributed over the width of the belt 14 and can form a bottom layer 16 of the desired thickness thereon. The base 82 of the distribution chamber 78 also comprises a base section 100 which adjoins the abovementioned base section 88 in the downstream direction and merges into a pouring nozzle 102 which slopes downwards in the machine direction of the device and, as a slot, extends over the entire width of the conveyor belt 14, for the purpose of forming a top layer 104 of coating material on the food products 18. In the embodiment illustrated, the top pouring nozzle 102 is provided with adjustable cover strips 106, so that coating material is poured only onto the food products 18, and not over the entire width of the belt.

The device described above operates as follows. A bottom layer 16 of coating material is formed on the rising part 68 of the endless conveyor belt 14, from a stream of coating material which is discharged from the distribution and coating station 76 via the side chutes 86. If desired, means may be provided for further distributing coating material over the width of the conveyor belt 14 and flattening it to a specific layer thickness. With the aid of a supply belt 74, food products 18 which are to be coated, and have been provided with a thin film of liquid egg white, are positioned on the bottom layer 16 of coating material which has been formed, and are then covered with a top layer 104 of coating material from a stream of coating material which is supplied via the top pouring nozzle 102. The coating material can be stuck securely in the liquid egg white film and to the food products by vibration and/or the application of pressure. Excess coating material falls through the conveyor belt 14 beyond the end of the guide plate 20 arranged beneath the conveyor belt 14 and passes into the collection device 26. Coating material which is lying on top of but has not stuck to the food products 18 and coating material which has remained on the belt 14 is blown away with the aid of the air knives 62 and is likewise collected in the collection device 26. From this device, the collected coating material is deposited in portions into the conveying containers 36 and is conveyed obliquely upwards as a result of displacement of the conveying containers 36 along the conveyor path 30. The conveying containers 36 are emptied above the distribution and coating station 28, and the coating material which is poured into the distribution chamber 78 is redistributed to the side chutes 86 and top pouring nozzle 102. At the end of the conveyor belt 14, the coated food products are removed from the conveyor belt, for example are transferred to a subsequent conveyor.

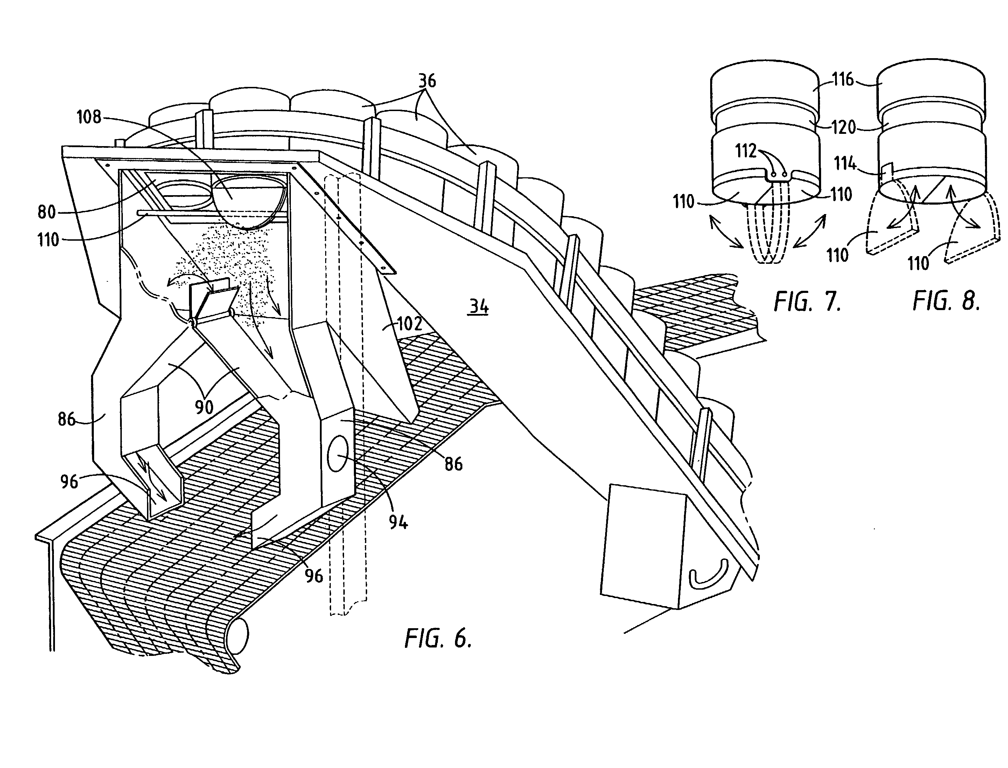

Fig. 6 shows a slightly different embodiment, in which identical components are denoted by identical reference numerals. Instead of hollow cylindrical conveying containers without a base and a cover, in this embodiment, conveying containers 36 with a self-unloading base 108 are used. A larger pouring opening 80, in which closure means 110 for reclosing the self-unloading base 108 are also arranged, is present in the bottom guide 34 of the guide means, which in this case does not have to have a closed surface.

Fig. 7 and 8 show two examples of conveying containers 36 with a self-unloading base 108. In the embodiment shown in Fig. 7 a circular base is divided along the centre line into two semicircles 110, which are each hinged to a hinge pin 112 by their straight sides. In the embodiment shown in Fig. 8, the hinge point 114 lies on the outer circumference. As can also be seen from these figures, the outer wall 116 of the cylindrical bodies 118 of the conveying containers 36 is provided with a recess 120 which extends over the entire circumference. The shape of the recess 120 corresponds to the inner side of the side guides 32, which comes into contact with the conveying containers 36. In this way, reliable guidance is produced.

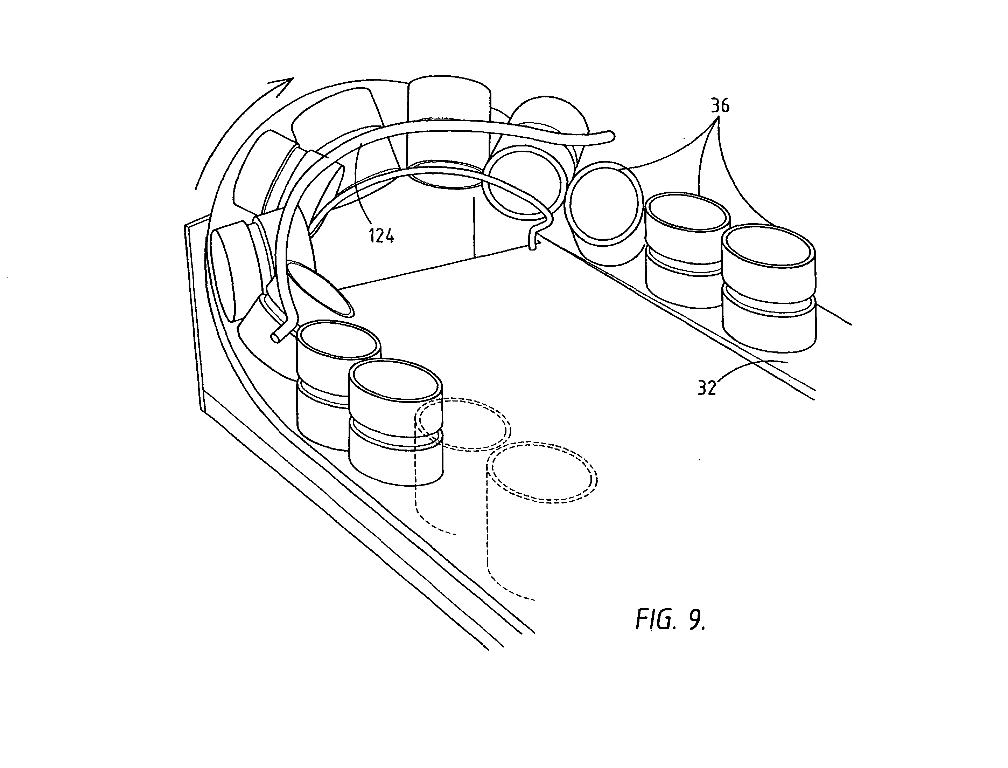

If the conveying containers 36 have a fixed base, it is possible to use guide means 31 as shown in Fig. 9. The shape of the bottom guide 34, side guides 32 and additional top guides 124 cause conveying containers 36 of this type to execute a forced tilting above the pouring opening 80 in the bottom guide 34.

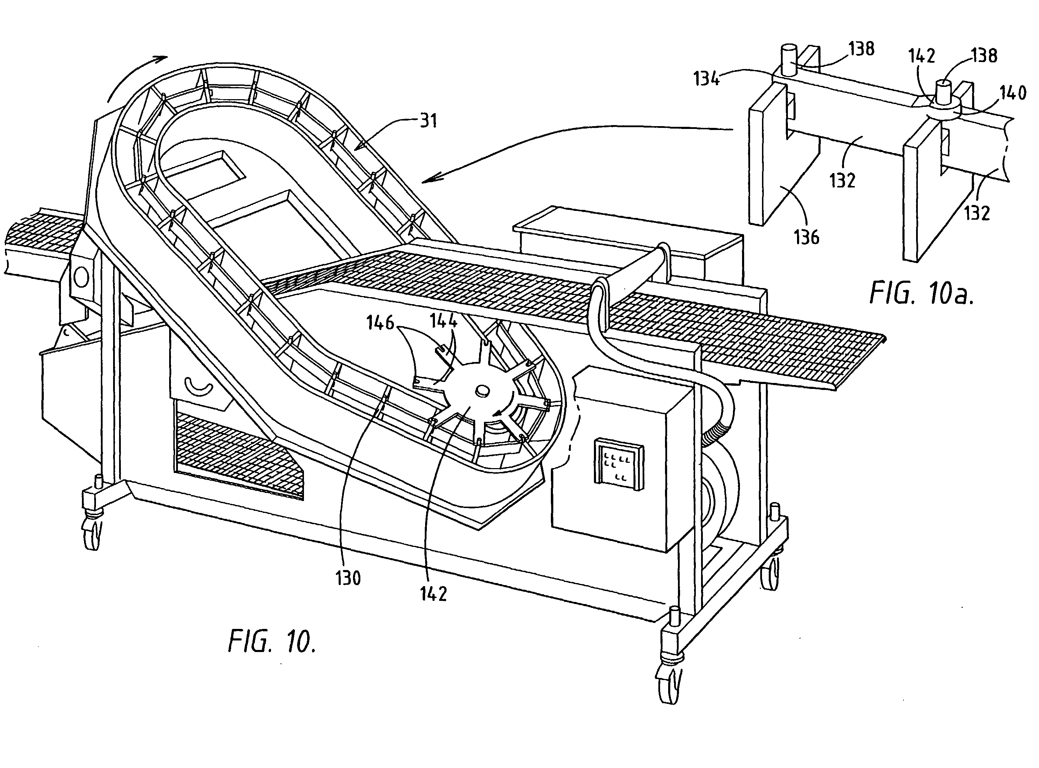

Fig. 10 and 10A show another embodiment of conveying means 22 which can be used in the present coating device. Instead of individual conveying containers 36, what is known as a partitioned belt 130 is used, which is arranged in channel-like guide means 31. The partitioned belt 130 comprises straight links 132 with, at one end, a transverse plate 136 which is at right angles thereto, and a connecting pin 138 for attaching a following link 132, and, at the other end, with an eyelet 142 for interacting with the connecting pin 138 of an adjacent link 132. The guide means 31 form a channel-like conveyor path 30 having only an open top side, with the result that the partitioned belt 130 can be displaced by a driven wheel 142 with radial arms 144 with a fork-shaped end 146 which in each case engages on a connecting pin 138.

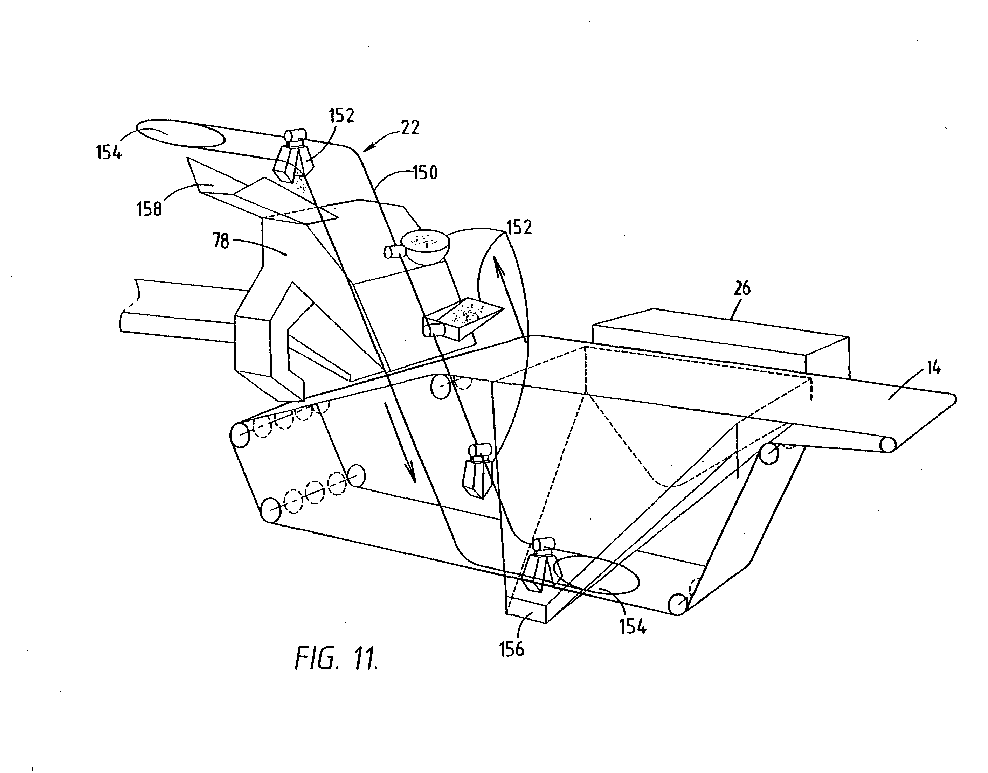

Fig. 11 shows another embodiment of conveyor means 22 which are arranged along one side of the endless conveyor belt 14 and comprise a driven belt 150, to which supports 152 are secured at a distance from one another. The belt 150 is guided over guide and return pulleys 154. This figure shows three different carriers 152, namely two-part grippers, hingeable receptacles and laddles. To fill these supports 152, the collection device 26 is provided with a discharge funnel 156 which extends in the transverse direction of the machine, while to fill the distribution chamber 78 there is a supply chute 158 which extends sideways beneath the unloading position of the supports 152.

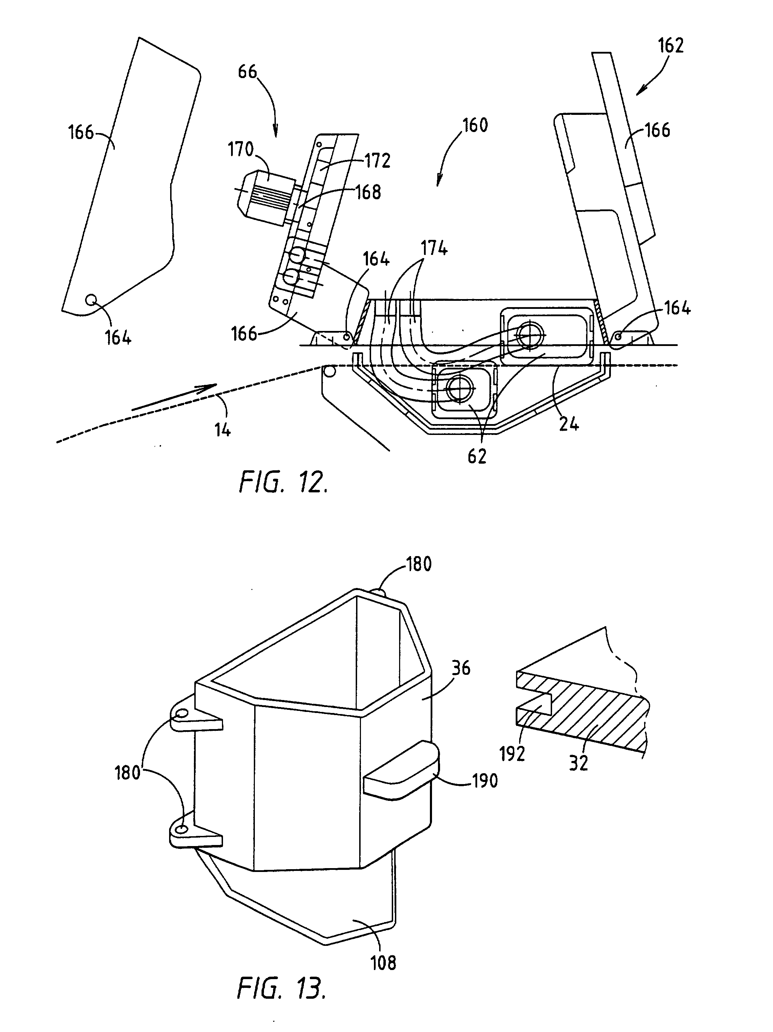

Fig. 12 shows a blowing station 160 with air knives 62 which are arranged above and below the horizontal top part 24 of the conveyor belt 14. The blowing station 160 comprises a hood 162, which comprises a plurality of hood parts 166 which can pivot about horizontal pivot pins 164. The pivot pins 164 are mounted in the frame (not shown) of the coating device. The entire hood 162 extends from the distribution device to the product discharge side. A fan 66, the impeller 168 of which is situated in the hood and the motor 170 of which is situated outside the hood, is secured to the middle hood part 166. Air which is sucked in via a labyrinth 172 is fed to the air knives 62 via lines 174. The long structure of the hood 162 effectively prevents dust from being able to escape; instead, it is deposited. The shape of the hood 162 and the position of the air knives 62 make an additional positive contribution to this effect.

Fig. 13 shows a further embodiment of a conveying container in the form of a polygonal receptacle 36, which is provided with a hinged, self-unloading base 108. Eyelets 180 are provided for the purpose of coupling the receptacles 36 to one another, while guide part 190 acts as an engagement point for the engagement means (teeth) of a turntable and as a guide point for contact with a side guide 32, which is provided with a matching guide groove 192.

## Claims

1. Method for coating moving food products (18) on all sides with particulate, free-flowing coating materials, which method comprises the steps of
applying a coating to the food products (18)
comprising the sub-steps of forming a continuous bottom layer (16) of coating material at a first coating position, placing the food products (18) which are to be coated onto the bottom layer (16) of coating material which has been formed, and forming a top layer (104) of coating material on the food products (18) at a second coating position,
removing and collecting coating material which has not been applied to the food products (18) at a collection position,
returning collected coating material from the collection position to a distribution position by batchwise displacement of collected coating material in one plane, which connects the collection position and the distribution position to one another, and distributing the returned coating material into two streams of coating material to the first and second coating positions.

2. Method according to claim 1, **characterized in that** collected coating material is returned with the aid of one conveyor device (22) for batchwise displacement of coating material.

3. Coating device (10) for coating moving food products with particulate, free-flowing coating materials, in particular a crumbing machine or a flour-coating machine, which coating device (10) comprises an endless conveyor belt (14), which is suitable for receiving the food products (18) and conveying them from an inlet end to an outlet end of the coating device (10), and a distribution and coating station (28), which is arranged in the vicinity of the inlet end and above the endless conveyor belt (14), for distributing and applying coating material, the distribution and coating station (28) comprises a distribution chamber (78) having at least two outlets for distributing coating material in at least two streams of coating material for forming a continuous bottom layer (16) of coating material at a first coating position and for forming a top layer (104) of coating material on the food products (18) at a second coating position, and a collection device (26), which is arranged in the vicinity of the outlet end, below the top part (24) of the endless conveyor belt (14), for collecting coating material which has not been applied to the food products (18), as well as conveyor means (22) for conveying coating material from the collection device (26) to the distribution and coating station (28), wherein the conveyor means (22) are designed for batchwise conveying of coating material from the collection device (26) to the distribution and coating station (28) along a conveyor path (30) which lies in one plane.

4. Coating device according to claim 3, **characterized in that** the conveyor means (22) comprise a number of separate conveying containers (36), which can be displaced in guide means (31) which delimit a conveyor path (30).

5. Coating device according to claim 3 or 4, **characterized in that** the conveyor path (30) is oval in shape.

6. Coating device according to one of the preceding claims 3-5, **characterized in that** the guide means comprise side guides (32), which are arranged on either side of the conveyor path (30), and a bottom guide (34).

7. Coating device according to one of the preceding claims 3-6, **characterized in that** the conveyor means (22) comprise a turntable (38), which can rotate about an axis which is substantially perpendicular to the plane of the conveyor path (30), is arranged on the inner side and in the vicinity of the bottom end of the conveyor path (30) and is provided with engagement means (42) for engaging at least one conveying container (36).

8. Coating device according to one of the preceding claims 3-7, **characterized in that** above the turntable (38) there is a distribution disc (44) which is fixedly connected to the turntable and comprises continuous distribution openings (46) lying along its circumference, in such a manner that the distribution openings (46) are aligned with respect to conveying containers (36) situated below them in the conveyor path (30).

9. Coating device according to one of the preceding claims 3-8, **characterized in that** the conveying containers (36) are provided with a self-unloading base (108).

10. Coating device according to one of the preceding claims 3-9, **characterized in that** the conveying containers (36) have an open underside, and the bottom guide (34) of the conveyor means (22) has a surface which closes off the open underside of the conveying containers (36) over at least a section from the collection device (26) to the distribution and coating station (28).

11. Coating device according to one of the preceding claims 3-10, **characterized in that** the bottom guide (34) is provided with at least one continuous pouring opening (80) which is located above an entry opening of the distribution and coating station (28).

12. Coating device according to claim 11, **characterized in that** the pouring opening (80) is provided with screens.

13. Coating device according to one of the preceding claims 11 or 12, **characterized in that** the final pouring opening (80) is connected to an outlet for discharging coating material from the device (10).

14. Coating device according to one of the preceding claims 3-13, **characterized in that** the distribution and coating station (28) comprises a housing which is arranged above the endless conveyor belt (14) and has an entry opening for the coating material supplied by the conveyor device (22), and a top pouring nozzle (102), which extends obliquely towards the endless belt (14) in the machine direction.

15. Coating device according to claim 14, **characterized in that** the top pouring nozzle (102) is provided with preferably adjustable cover strips (106).

16. Coating device according to one of the preceding claims 14-15, **characterized in that** the distribution and coating station (28) is provided with a side chute (86) with a bottom pouring nozzle (96) which slopes towards the endless conveyor belt (14).

17. Coating device according to claim 16, **characterized in that** the coating device (10) is provided with a supply unit (74), which extends above a rising part (68) of the endless conveyor belt (14), for supplying the food products (18) which are to be coated, and the bottom pouring nozzle (96) extends vertically below the said supply unit (74).

18. Coating device according to one of the preceding claims 16-17, **characterized in that** the distribution and coating station (28) comprises two side chutes (86) with a bottom pouring nozzle (96) which are arranged on either side of the coating device (10).

19. Coating device according to one of the preceding claims 3-13, **characterized in that** the distribution and coating position (28) has a base section (88), which tapers to a point and side faces (90) of which each slope towards a side chute (86).

20. Coating device according to claim 19, **characterized in that** the pointed part of the base section (88) is provided with a distribution plate (92) which can move to and fro substantially about a pivot axis which is horizontal in the machine direction.

21. Coating device according to one of the preceding claims 3-8 and 14-20, **characterized in that** the conveying containers (36) have a closed base and an open top side, and the guide means (31) are designed to allow the conveying containers (36) to tilt above the entry opening of the distribution and coating station (28).

22. Coating device according to claim 3, **characterized in that** the conveying containers comprise spaces which are delimited by transverse plates (136), which are attached to an endless chain (130), comprising links (132), and by side guides (32) and bottom guide (34) of the guide means.

23. Coating device according to claims 3, **characterized in that** the conveyor means comprise an endless belt (150) which is arranged next to the endless belt (14) and is guided over at least one guide wheel (154) arranged at the top end and at least one guide wheel (154) arranged at the bottom end of the conveyor track, to which guide means carriers (152) are attached, at a distance from one another.

24. Coating device according to claim 23, **characterized in that** the carriers (152) are self-unloading.

## Patentansprüche

1. Verfahren zum Beschichten von transportierten Nahrungsmitteln (18) auf allen Seiten mit partikelförmigen, frei fließenden Beschichtungsmaterialien, wobei das Verfahren die Schritte aufweist:
Aufbringen einer Beschichtung auf die Nahrungsmittel (18)
mit den Unterschritten: Ausbilden einer kontinuierlichen Bodenschicht (16) aus Beschichtungsmaterial an einer ersten Beschichtungsposition, Platzieren der zu beschichtenden Nahrungsmittel (18) auf der Bodenschicht (16) aus dem ausgebildeten Beschichtungsmaterial und Ausbilden einer Oberschicht (104) aus Beschichtungsmaterial auf den Nahrungsmitteln (18) an einer zweiten Beschichtungsposition,
Entfernen und Sammeln des Beschichtungsmateriales, das nicht auf die Nahrungsmittel (18) aufgebracht worden ist, an einer Sammelposition,
Rückführen des gesammelten Beschichtungsmateriales von der Sammelposition zu einer Verteilerposition durch chargenweise Verlagerung des gesammelten Beschichtungsmateriales in einer Ebene, die die Sammelposition und die Verteilerposition miteinander verbindet, und Aufteilen des rückgeführten Beschichtungsmateriales in zwei Ströme aus Beschichtungsmaterial zu der ersten und zweiten Beschichtungsposition.

2. Verfahren nach Anspruch 1, **dadurch gekennzeichnet, dass** das gesammelte Beschichtungsmaterial mit Hilfe einer Förderbandeinrichtung (22) zum chargenweisen Verlagern des Beschichtungsmateriales rückgeführt wird.

3. Beschichtungsvorrichtung (10) zum Beschichten von transportierten Nahrungsmitteln mit partikelförmigen, frei fließenden Beschichtungsmaterialien, insbesondere Paniermaschine oder Mehlbeschichtungsmaschine, wobei die Beschichtungsvorrichtung (10) ein endloses Förderband (14), das für die Aufnahme der Nahrungsmittel (18) ausgelegt ist und diese von einem Einlassende zu einem Auslassende der Beschichtungsvorrichtung (10) fördert, und eine Verteiler- und Beschichtungsstation (28) aufweist, die in der Nähe des Einlassendes und oberhalb des endlosen Förderbandes (14) angeordnet ist, um das Beschichtungsmaterial zu verteilen und aufzubringen, wobei die Verteiler- und Beschichtungsstation (28) eine Verteilerkammer (78) mit zumindest zwei Auslässen aufweist, um Beschichtungsmaterial in zumindest zwei Ströme von Beschichtungsmaterial aufzuteilen, um eine kontinuierliche Bodenschicht (16) aus Beschichtungsmaterial in einer ersten Beschichtungsposition auszubilden und um eine Oberschicht (104) aus Beschichtungsmaterial auf die Nahrungsmittel (18) an einer zweiten Position auszubilden, und die Vorrichtung ferner eine Sammeleinrichtung (26), die in der Nachbarschaft des Auslassendes unterhalb der Oberseite (24) des endlosen Förderbandes (14) angeordnet ist, um Beschichtungsmaterial, das nicht auf die Nahrungsmittel (18) aufgebracht worden ist, zu sammeln, und schließlich eine Transporteinrichtung (22) zum Zufuhren von Beschichtungsmaterial von der Sammeleinrichtung (26) zu der Verteiler- und Beschichtungsstation (28) aufweist, wobei die Fördereinrichtung (22) zum chargenweisen Fördern des Beschichtungsmateriales von der Sammeleinrichtung (26) zu der Verteiler- und Beschichtungsstation (28) längs eines Förderweges (30) ausgelegt ist, der in einer Ebene liegt.

4. Beschichtungsvorrichtung nach Anspruch 3, **dadurch gekennzeichnet, dass** die Fördereinrichtung (22) eine Anzahl von separaten Förderbehältern (36) aufweist, die in Führungseinrichtungen (31) versetzt werden können, die einen Förderweg (30) begrenzen.

5. Beschichtungsvorrichtung nach Anspruch 3 oder 4, **dadurch gekennzeichnet, dass** der Förderweg (30) in seiner Form oval ist.

6. Beschichtungsvorrichtung nach einem der vorhergehenden Ansprüchen 3 bis 5, **dadurch gekennzeichnet, dass** die Führungseinrichtung seitliche Führungen (32), die auf beiden Seiten des Förderweges (30) angeordnet sind, und eine Bodenführung (34) aufweist.

7. Beschichtungsvorrichtung nach einem der vorhergehenden Ansprüchen 3 bis 6, **dadurch gekennzeichnet, dass** die Fördereinrichtung (22) einen Drehtisch (38) aufweist, der um eine Achse, die im Wesentlichen senkrecht zu der Ebene des Förderweges (30) ist, gedreht werden kann, der auf der Innenseite und in der Nachbarschaft des Bodenendes des Förderweges (30) angeordnet und mit Greifeinrichtungen (42) zum Greifen zumindest eines Förderbehälters (36) versehen ist.

8. Beschichtungsvorrichtung nach einem der vorhergehenden Ansprüchen 3 bis 7, **dadurch gekennzeichnet, dass** oberhalb des Drehtisches (38) eine Verteilerscheibe (44) angeordnet ist, die fest mit dem Drehtisch (38) verbunden ist und aufeinander folgende Verteileröffnungen (46) längs seines Umfanges aufweist, derart, dass die Verteileröffnungen (46) in Bezug zu den Förderbehältern (36) ausgerichtet und unter diesen in dem Förderweg gelegen sind.

9. Beschichtungsvorrichtung nach einem der vorhergehenden Ansprüchen 3 bis 8, **dadurch gekennzeichnet, dass** die Förderbehälter (36) mit einem Selbstentladeboden (108) versehen sind.

10. Beschichtungsvorrichtung nach einem der vorhergehenden Ansprüchen 3 bis 9, **dadurch gekennzeichnet, dass** die Förderbehälter (36) eine offene Unterseite aufweisen und die Bodenführung (34) der Fördereinrichtung (22) eine Oberfläche aufweist, die die offene Unterseite der Förderbehälter (36) über zumindest einen Bereich von der Sammeleinrichtung (26) zu der Verteiler- und Beschichtungsstation (28) verschließt.

11. Beschichtungsvorrichtung nach einem der vorhergehenden Ansprüchen 3 bis 10, **dadurch gekennzeichnet, dass** die Bodenführung (34) mit zumindest einer kontinuierlichen Ausschüttöffnung (80) versehen ist, die über einer Eintrittsöffnung der Verteiler- und Beschichtungsstation (28) gelegen ist.

12. Beschichtungsvorrichtung nach Anspruch 11, **dadurch gekennzeichnet, dass**, die Ausschüttöffnung (80) mit Sieben versehen ist.

13. Beschichtungsvorrichtung nach einem der vorhergehenden Ansprüchen 11 oder 12, **dadurch gekennzeichnet, dass** die letzte Ausschüttöffnung (80) mit einem Auslass verbunden ist, um Beschichtungsmaterial von der Vorrichtung (10) zu entladen.

14. Beschichtungsvorrichtung nach einem der vorhergehenden Ansprüchen 3 bis 13, **dadurch gekennzeichnet, dass** die Verteiler- und Beschichtungsposition (28) ein Gehäuse, das oberhalb des endlosen Förderbandes (14) angeordnet ist, und eine Eingangsöffnung für das von der Fördereinrichtung (22) gelieferte Beschichtungsmaterial sowie eine obere Ausschüttdüse (102) aufweist, die sich schräg gegen das endlose Förderband (14) in Maschinenrichtung erstreckt.

15. Beschichtungsvorrichtung nach Anspruch 14, **dadurch gekennzeichnet, dass** die obere Ausschüttdüse (102) mit vorzugsweise einstellbaren Abdeckstreifen (106) versehen ist.

16. Beschichtungsvorrichtung nach einem der vorhergehenden Ansprüchen 14 bis 15, **dadurch gekennzeichnet, dass** die Verteiler- und Beschichtungsstation (28) einer Seitenrutschen (86) mit einer unteren Ausschüttdüse (96) aufweist, die gegen das endlose Förderband geneigt ist.

17. Beschichtungsvorrichtung nach Anspruch 16, **dadurch gekennzeichnet, dass** die Beschichtungsvorrichtung (10) mit einer Zuführeinheit (74) versehen ist, die sich über einen ansteigenden Teil (68) des endlosen Förderbandes (14), um die zu beschichtenden Nahrungsmittel (18) zuzuführen, wobei die Bodenausschüttdüse (96) sich vertikal unter der Zuführeinheit (74) erstreckt.

18. Beschichtungsvorrichtung nach einem der vorhergehenden Ansprüchen 16 bis 17 **dadurch gekennzeichnet, dass** die Verteiler- und Beschichtungsstation (28) zwei Seitenrutschen (86) mit jeweils einer unteren Ausschüttdüse (96) aufweist, die auf beiden der Beschichtungsvorrichtung (10) angeordnet sind.

19. Beschichtungsvorrichtung nach einem der vorhergehenden Ansprüchen 3 bis 13, **dadurch gekennzeichnet, dass** die Verteiler- und Beschichtungsposition (28) einen Basisbereich (88) aufweist, der konisch an einem Ort zusammenläuft und Seitenflächen (90) aufweist, von denen jede gegen eine Seitenrutsche (86) geneigt ist.

20. Beschichtungsvorrichtung nach Anspruch 19, **dadurch gekennzeichnet, dass** der zusammenlaufende Teil des Basisbereiches (88) mit einer Verteilerplatte (92) versehen ist, die nach beiden Seiten um eine Schwenkachse bewegbar ist, welche in Maschinenrichtung horizontal gelegen ist.

21. Beschichtungsvorrichtung nach einem der vorhergehenden Ansprüchen 3-8 and 14-20, **dadurch gekennzeichnet, dass** die Förderbehälter (36) eine geschlossene Basis und eine offene Oberseite aufweisen, und dass die Führungseinrichtung (31) so konstruiert ist, dass die Förderbehälter (36) über die Eingangsöffnung der Verteiler- und Beschichtungsstation (28) kippen können.

22. Beschichtungsvorrichtung nach Anspruch 3, **dadurch gekennzeichnet, dass** die Förderbehälter Räume aufweisen, die durch Querplatten (136) begrenzt und mit einer Endloskette (130) verbunden sind sowie Verbindungen (132) aufweisen und ferner durch Seitenführungen (32) und durch eine Bodenführung (34) der Führungseinrichtung begrenzt sind.

23. Beschichtungsvorrichtung nach Anspruch 3, **dadurch gekennzeichnet, dass** die Transporteinrichtung ein Endlosförderband (150) aufweist, das nach dem Endlosband (14) angeordnet und über zumindest ein Führungsrad (154) am oberen Ende und zumindest ein Führungsrad (154) am unteren Ende des Förderweges geführt ist, wobei mit dem Endlosband Fördereinrichtungsträger (152) in Abstand von einander verbunden sind.

24. Beschichtungsvorrichtung nach Anspruch 23, **dadurch gekennzeichnet, dass** die Träger (152) selbst entladend sind.

## Revendications

1. Procédé de revêtement de produits alimentaires en mouvement (18) sur tous les côtés avec une matière de revêtement particulaire à écoulement libre, lequel procédé comprend les étapes consistant à
appliquer un revêtement sur les produits alimentaires (18),
ladite application comprenant les sous-étapes consistant à former une couche inférieure continue (16) de matière de revêtement à une première position de revêtement, placer les produits alimentaires (18) à revêtir sur la couche inférieure (16) de matière de revêtement qui a été formée, et former une couche supérieure (104) de matière de revêtement sur les produits alimentaires (18) en une deuxième position de revêtement,
retirer et collecter la matière de revêtement qui n'a pas été appliquée sur les produits alimentaires (18) à une position de collecte,
ramener la matière de revêtement collectée de la position de collecte à une position de distribution en déplaçant par lots la matière de revêtement collectée dans un plan, qui relie entre elles la position de collecte et la position de distribution, et
répartir la matière de revêtement ramenée en deux flux de matière de revêtement en direction des première et deuxième positions de revêtement.

2. Procédé selon la revendication 1, **caractérisé en ce que** la matière de revêtement collectée est ramenée à l'aide d'un dispositif de transport (22) afin de déplacer par lots la matière de revêtement.

3. Dispositif de revêtement (10) destiné à revêtir des produits alimentaires en mouvement avec des matières de revêtement particulaires à écoulement libre, en particulier dans une machine à effriter ou dans une machine de revêtement à poudre, lequel dispositif de revêtement (10) comprend
- une bande transporteuse sans fin (14), qui est destinée à recevoir les produits alimentaires (18) et à les transporter d'une extrémité d'entrée vers une extrémité de sortie du dispositif de revêtement (10), et
- une station de distribution et de revêtement (28), qui est placée à proximité de l'extrémité d'entrée et au-dessus de la bande transporteuse sans fin (14), pour distribuer et appliquer la matière de revêtement,
la station de distribution et de revêtement (28) comprenant
- une chambre de distribution (78) qui comporte au moins deux sorties destinées à distribuer la matière de revêtement en au moins deux flux de matière de revêtement afin de former une couche inférieure continue (16) de matière de revêtement à une première position de revêtement et afin de former une couche supérieure (104) de matière de revêtement sur les produits alimentaires (18) à une deuxième position de revêtement,
- un dispositif de collecte (26), qui est placé à proximité de l'extrémité de sortie, au-dessous de la partie supérieure (24) de la bande transporteuse sans fin (14), afin de collecter la matière de revêtement qui n'a pas été appliquée sur les produits alimentaires (18), et
- un moyen de transport (22) destiné à transporter la matière de revêtement du dispositif de collecte (26) à la station de distribution et de revêtement (28), les moyens de transport (22) étant conçus pour transporter par lots la matière de revêtement du dispositif de collecte (26) à la station de distribution et de revêtement (28) le long d'un chemin de transport (30) qui est situé dans un plan.

4. Dispositif de revêtement selon la revendication 3, **caractérisé en ce que** les moyens de transport (22) comprennent un certain nombre de conteneurs de transport séparés (36), qui peuvent être déplacés dans des moyens de guidage (31) qui délimitent un chemin de transport (30).

5. Dispositif de revêtement selon la revendication 3 ou 4, **caractérisé en ce que** le chemin de transport (30) a une forme ovale.

6. Dispositif de revêtement selon l'une des revendications précédentes 3 à 5, **caractérisé en ce que** les moyens de guidage comprennent des guides latéraux (32), qui sont placés d'un côté et de l'autre du chemin de transport (30), et un guide inférieur (34).

7. Dispositif de revêtements selon l'une des revendications précédentes 3 à 6, **caractérisé en ce que** les moyens de transport (22) comprennent une table tournante (38), qui peut tourner autour d'un axe qui est sensiblement perpendiculaire au plan du chemin de transport (30), qui est agencée du côté intérieur et à proximité de l'extrémité inférieure du chemin de transport (30) et qui est dotée de moyens d'engagement (42) destinés à s'engager avec au moins un conteneur de transport (36).

8. Dispositif de revêtement selon l'une des revendications précédentes 3 à 7, **caractérisé en ce que** au-dessus de la table tournante (38) est placé un disque de distribution (44) qui est relié fixe à la table tournante et qui comprend des ouvertures de distribution continue (46) ménagées le long de sa circonférence, de manière à ce que les ouvertures de distribution (46) soient alignées avec les conteneurs de transport (36) situés au-dessous d'elles dans le chemin de transport (30).

9. Dispositif de revêtement selon l'une des revendications précédentes 3 à 8, **caractérisé en ce que** les conteneurs de transport (36) sont dotés d'une base de déchargement automatique (108).

10. Dispositif de revêtement selon l'une des revendications précédentes 3 à 9, **caractérisé en ce que** les conteneurs de transport (36) comportent un côté inférieur ouvert, et **en ce que** le guide inférieur (34) des moyens de transport (22) présente une surface qui ferme le côté inférieur ouvert des conteneurs de transport (36) sur au moins une section allant du dispositif de collecte (26) à la station de distribution et de revêtement (28).

11. Dispositif de revêtement selon l'une des revendications précédentes 3 à 10, **caractérisé en ce que** le guide inférieur (34) est doté d'au moins une ouverture de versement continu (80) qui est ménagée au-dessus d'une ouverture d'entrée de la station de distribution et de revêtement (28).

12. Dispositif de revêtement selon la revendication 11, **caractérisé en ce que** l'ouverture de versement (80) est dotée de cribles.

13. Dispositif de revêtement selon l'une des revendications précédentes 11 ou 12, **caractérisé en ce que** l'ouverture de versement final (80) est reliée à une sortie d'évacuation de matière de revêtement du dispositif (10).

14. Dispositif de revêtement selon l'une des revendications précédentes 3 à 13, **caractérisé en ce que** la station de distribution et de revêtement (28) comprend un boîtier qui est placé au-dessus de la bande transporteuse sans fin (14) et qui comporte une ouverture d'entrée destinée à la matière de revêtement délivrée par le dispositif de transport (22), et une buse de versement supérieure (102), qui s'étend obliquement vers la bande sans fin (14) dans la direction de la machine.

15. Dispositif de revêtement selon la revendication 14, **caractérisé en ce que** la buse de versement supérieure (102) est dotée de bandes de recouvrement (106) de préférence réglables.

16. Dispositif de revêtement selon l'une des revendications précédentes 14 et 15, **caractérisé en ce que** la station de distribution et de revêtement (28) est dotée d'une goulotte latérale (86) comportant une buse de versement inférieure (96) qui est inclinée en direction de la bande transporteuses sans fin (14).

17. Dispositif de revêtement selon la revendication 16, **caractérisé en ce que** le dispositif de revêtement (10) est doté d'une unité d'alimentation (74), qui s'étend au-dessus d'une partie montante (68) de la bande transporteuse sans fin (14), afin de délivrer les produits alimentaires (18) à revêtir, et la buse de versement inférieure (96) s'étend verticalement au-dessous de ladite unité d'alimentation (74).

18. Dispositif de revêtement selon l'une des revendications précédentes 16 à 17 **caractérisé en ce que** la station de distribution et de revêtement (28) comprend deux goulottes latérales (86), dotées d'une buse de versement inférieure (96), qui sont placées d'un côté et de l'autre du dispositif de revêtement (10).

19. Dispositif de revêtement selon l'une des revendications précédentes 3 à 13, **caractérisé en ce que** la position de distribution et de revêtement (28) comporte une section de base (88), qui s'amincit en pointe et dont les faces latérales (90) sont chacune inclinées en direction d'une goulotte latérale (86).

20. Dispositif de revêtement selon la revendication 19, **caractérisé en ce que** la partie en pointe de la section de base (88) est dotée d'une plaque de distribution (92) qui peut se déplacer suivant un mouvement alternatif sensiblement autour d'un axe de pivotement qui est horizontal dans la direction de la machine.

21. Dispositif de revêtement selon l'une des revendications précédentes 3-8 et 14-20, **caractérisé en ce que** les conteneurs de transport (36) comportent une base fermée et un côté supérieur ouvert, et **en ce que** les moyens de guidage (31) sont conçus pour permettre l'inclinaison des conteneurs de transport (36) au-dessus de l'ouverture d'entrée de la station de distribution et de revêtement (28).

22. Dispositif de revêtement selon la revendication 3, **caractérisé en ce que** les conteneurs de transport comprennent des espaces qui sont délimités par des plaques transversales (136), qui sont fixées à une chaîne sans fin (130), comprenant des maillons (132), et par des guides latéraux (32) et un guide inférieur (34) des moyens de guidage.

23. Dispositif de revêtement selon la revendication 3, **caractérisé en ce que** les moyens de transport comprennent une bande sans fin (150) qui est située à proximité de la bande sans fin (14) et qui est guidée par-dessus au moins une roue de guidage (154) située à l'extrémité supérieure et au moins une roue de guidage (154) située à l'extrémité inférieure du chemin de transport, auxquelles sont fixés des supports de moyens de guidage (152) à distance l'un de l'autre.

24. Dispositif de revêtement selon la revendication 23, **caractérisé en ce que** les supports (152) sont à déchargement automatique.
